# EUROPEAN PATENT APPLICATION

(11) **EP 4 667 818 A1**
(43) Date of publication of application: **24.12.2025**
(21) Application number: 23930656.6
(22) Date of filing: 31.03.2023
(51) Int. Cl.: F21V 5/00, F21S 10/00, F21V 9/08, F21V 9/40

(54) **LIGHTING DEVICE**

(71) Applicant: MITSUBISHI ELECTRIC CORPORATION, Chiyoda-ku Tokyo 100-8310 (JP)
(72) Inventor: TERASHIMA, Haruka, Tokyo 100-8310 (JP); YAMADA, Akihiro, Tokyo 100-8310 (JP)
(74) Representative: Meissner Bolte Partnerschaft mbB
(86) International application number: PCT/JP2023/013602
(87) International publication number: WO 2024/202022

(57) **Abstract**

A lighting device (101) includes a light source (1), and an optical element (2) formed of a crystalline or amorphous solid. The optical element includes an incidence surface (21) on which light emitted from the light source is incident, and an emission surface (22) from which the light incident from the incidence surface is emitted toward an irradiation surface. When viewed in an optical axis direction of the light source, the light source is disposed inside respective outer peripheral edges of the incidence surface and the emission surface of the optical element. The optical element is provided so as to refract the light incident from the incidence surface to emit light having a non-uniform intensity distribution from the emission surface to the irradiation surface.

## Description

### TECHNICAL FIELD

The present disclosure relates to a lighting device.

### BACKGROUND ART

Japanese Patent Laying-Open No. 2012-146559 (PTL 1) discloses a lighting device in which a liquid surface of a translucent liquid is undulated inside a hollow panel disposed in front of a light source in its light emission direction and light passing through the liquid surface is emitted as fluctuation light. This lighting device is provided so that the liquid surface is undulated by circulating the liquid between a liquid circulation means, which is provided outside the hollow panel as a body separate from the hollow panel, and the hollow panel.

### CITATION LIST

### PATENT LITERATURE

PTL 1: Japanese Patent Laying-Open No. 2012-146559

### SUMMARY OF INVENTION

### TECHNICAL PROBLEM

However, in the lighting device described in PTL 1, a liquid circulation means is essential and its structure is complicated.

A main object of the present disclosure is to provide a lighting device that is capable of irradiation with light having a non-uniform intensity distribution while having a relatively simple structure.

### SOLUTION TO PROBLEM

A lighting device according to the present disclosure includes a light source, and at least one optical element formed of a crystalline or amorphous solid. The at least one optical element includes an incidence surface on which light emitted from the light source is incident, and an emission surface from which the light incident from the incidence surface is emitted toward an irradiation surface. When viewed in an optical axis direction of the light source, the light source is disposed inside respective outer peripheral edges of the incidence surface and the emission surface of the at least one optical element. The at least one optical element is provided so as to refract the light incident from the incidence surface to emit light having a non-uniform intensity distribution from the emission surface to the irradiation surface.

### ADVANTAGEOUS EFFECTS OF INVENTION

The present invention can provide a lighting device that is capable of irradiation with light having a non-uniform intensity distribution while having a relatively simple structure.

### BRIEF DESCRIPTION OF DRAWINGS

Fig. 1 is a cross-sectional view for explaining a lighting device according to a first embodiment.
Fig. 2 is a front view of an optical element of the lighting device illustrated in Fig. 1.
Fig. 3 is a side view of the optical element of the lighting device illustrated in Fig. 1.
Fig. 4 is a perspective view of the optical element of the lighting device illustrated in Fig. 1, which is viewed from an emission surface side.
Fig. 5 is a cross-sectional view for explaining a variation of the lighting device according to the first embodiment.
Fig. 6 is a cross-sectional view for explaining a lighting device according to a second embodiment.
Fig. 7 is a cross-sectional view for explaining a variation of the lighting device according to the second embodiment.
Fig. 8 is a cross-sectional view for explaining a lighting device according to a third embodiment.
Fig. 9 is a cross-sectional view for explaining a variation of the lighting device according to the third embodiment.
Fig. 10 is a cross-sectional view for explaining a variation of the lighting device according to the third embodiment.

### DESCRIPTION OF EMBODIMENTS

Embodiments of the present disclosure are described below with reference to the drawings. In the drawings mentioned hereinafter, the same or corresponding portions are given the same reference characters, which are not described repeatedly. Also, in each of the drawings, structures are illustrated schematically and are not intended to show actual dimensions.

### First Embodiment.

A lighting device 101 according to a first embodiment is a device for irradiating an irradiation surface 200 with light having a non-uniform intensity distribution. Herein, light having a non-uniform intensity distribution means light whose intensity distribution has no symmetry. Lighting device 101 is provided, for example, so as to emit light whose intensity distribution has no rotational symmetry to an irradiation surface. Irradiation surface 200 may be any surface positioned outside lighting device 101 in a direction in which light is emitted and may be, for example, a floor surface, a wall surface, a desk upper surface, or the like when lighting device 101 is attached to a ceiling or a wall in a living room.

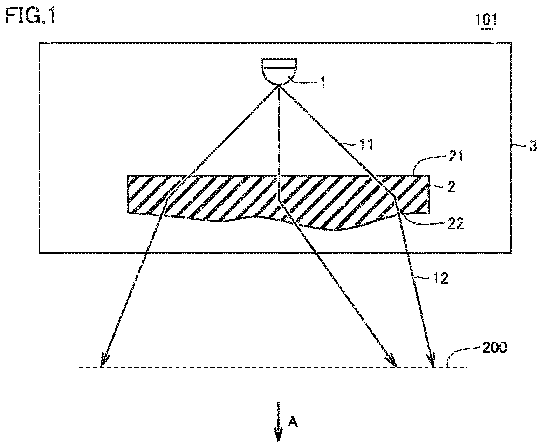

As illustrated in Fig. 1, lighting device 101 according to the first embodiment mainly includes a light source 1 and an optical element 2.

Light source 1 may be any light source that emits visible light. Light source 1 may be a light source that emits light in a specific wavelength range included in a visible light wavelength range or may be a light source that can emit white light. For example, light source 1 includes a light-emitting element such as a light-emitting diode (LED) or a laser. Light source 1 may include the light-emitting element and a phosphor having a peak of an emission wavelength in a wavelength range in a complementary color relation to the emission wavelength range of the light-emitting element. Light source 1 may include an LED or a laser that emits light in a blue wavelength range, and a phosphor that is excited by part of the light emitted from the light-emitting element and has a peak of light emission in a wavelength range of yellow in a complementary color relation to blue. Light source 1 may be capable of changing the color (wavelength range) of the light to be emitted.

Light source 1 is provided, for example, so as to emit light whose intensity distribution has symmetry to an incidence surface 21 of optical element 2, as is described later. The light emitted from light source 1 has, for example, an intensity distribution in which the intensity decreases as the distance from the optical axis increases. Such an intensity distribution has rotational symmetry about the optical axis.

As illustrated in Figs. 1 to 4, optical element 2 is formed of a crystalline or amorphous solid. Optical element 2 includes incidence surface 21 on which light emitted from light source 1 is incident, and an emission surface 22 from which the light incident from incidence surface 21 is emitted toward irradiation surface 200. When viewed in an optical axis direction A of light source 1, light source 1 is disposed inside respective outer peripheral edges of incidence surface 21 and emission surface 22 of optical element 2. When viewed in optical axis direction A of light source 1, the minimum width of optical element 2 is larger than the maximum width of light source 1.

Optical element 2 is provided so as to refract the light incident from incidence surface 21 to emit light having a non-uniform intensity distribution from emission surface 22 to irradiation surface 200. Optical element 2 is provided, for example, so as to emit light whose intensity distribution has no rotational symmetry to irradiation surface 200.

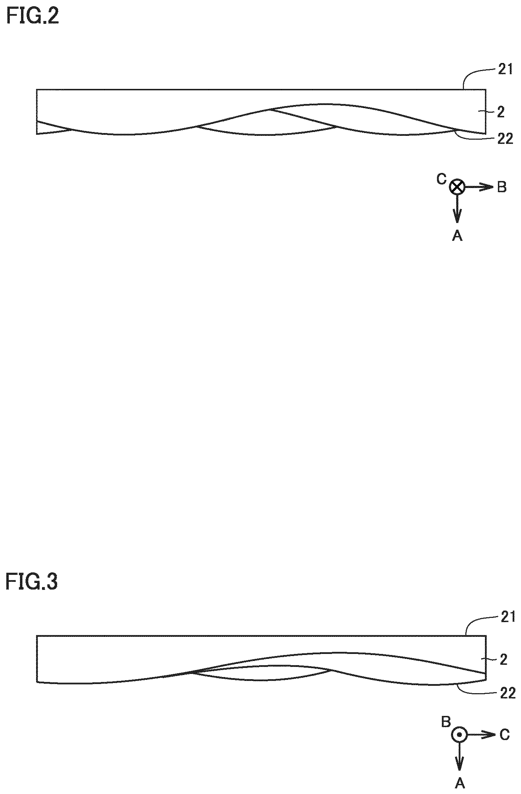

Figs. 2 to 4 are a front view, a side view, and a perspective view, respectively, which illustrate an example of optical element 2. As illustrated in Figs. 1 to 4, at least one of incidence surface 21 and emission surface 22 of optical element 2 is a free curved surface. Herein, the free curved surface means an uneven surface that, at least, has no rotational symmetry. At least one of incidence surface 21 and emission surface 22 has no rotational symmetry axis in an in-plane position or an out-of-plane position. Preferably, at least one of incidence surface 21 and emission surface 22 of optical element 2 does not have line symmetry, either.

In optical element 2 illustrated in Figs. 1 to 4, incidence surface 21 is a flat surface and emission surface 22 is a free curved surface. Incidence surface 21 may be a free curved surface and emission surface 22 may be a flat surface. Each of incidence surface 21 and emission surface 22 may be a free curved surface. Incidence surface 21 is just required to intersect with the optical axis of light source 1. Incidence surface 21 may be orthogonal to the optical axis of light source 1.

A material of which optical element 2 is formed may be any material as long as it allows light emitted from light source 1 to pass therethrough and has a refractive index different from that of a medium (such as air) with which space around optical element 2 is filled. Preferably, the material of which optical element 2 is formed includes an amorphous material. The material of which optical element 2 is formed includes, for example, an amorphous resin material represented by acrylic or polycarbonate, or an amorphous solid such as glass.

Space between light source 1 and incidence surface 21 of optical element 2 is filled with a medium transparent to the light emitted from light source 1 and different in refractive index from the material of which optical element 2 is formed. Such a medium is air for example.

The distance (irradiation distance) between light source 1 and incidence surface 21 of optical element 2 may be longer than, for example, the distance (thickness) between incidence surface 21 and emission surface 22 of optical element 2.

Lighting device 101 may further include a casing 3 that accommodates light source 1 and optical element 2 in casing 3. In this case, light source 1 and optical element 2 are fixed to casing 3. Casing 3 includes a portion through which the light emitted from emission surface 22 of optical element 2 passes. Preferably, in casing 3, a reflection member that reflects the light emitted from light source 1 is not disposed in a region that overlaps optical element 2 when viewed in the optical axis direction of light source 1. More specifically, in casing 3, a reflection member that reflects the light reflected off incidence surface 21 of optical element 2 is not disposed in a region that overlaps optical element 2 and is positioned further on the hinder side than light source 1 when viewed in the optical axis direction of light source 1 (on the opposite side of optical element 2 in relation to light source 1). Lighting device 101 is not necessarily required to include casing 3. Light source 1 and optical element 2 may be fixed to a ceiling, a wall, or the like on which lighting device 101 is placed. In this case, in the state where lighting device 101 is placed, a reflection member that reflects the light emitted from light source 1 is not disposed in a region that overlaps optical element 2 when viewed in the optical axis direction of light source 1. It is preferable that the reflection member is not disposed further on the hinder side than light source 1.

### <Effects>

Lighting device 101 can emit light having a non-uniform intensity distribution to irradiation surface 200 without using a liquid by refracting the light emitted from light source 1 in optical element 2 formed of a crystalline or amorphous solid. Since lighting device 101 needs no liquid circulation means, the structure of lighting device 101 is simpler than that of a conventional lighting device including a liquid circulation means. That is, with a relatively simple structure, lighting device 101 can form a lighting pattern of light having a non-uniform intensity distribution on irradiation surface 200. Such a space rendering effect of lighting device 101 is higher than that of a lighting device capable of irradiation only with light whose intensity distribution has symmetry.

In lighting device 101, light source 1 may be provided so as to emit light whose intensity distribution has rotational symmetry to incidence surface 21. From a different viewpoint, light source 1 may be provided, for example, so as to emit light having an intensity distribution in which the intensity decreases as the distance from the optical axis increases. In this case, it is preferable that optical element 2 is provided, for example, so as to emit light whose intensity distribution has no rotational symmetry to irradiation surface 200. Such lighting device 101 is capable of irradiation with light having a non-uniform intensity distribution while including light source 1, which is relatively easy to obtain. More preferably, optical element 2 is provided so as to emit light whose intensity distribution does not have rotational symmetry or line symmetry to irradiation surface 200. Such lighting device 101 is capable of irradiation with light having high non-uniformity of intensity distribution.

In casing 3 in lighting device 101, a reflection member that reflects the light emitted from light source 1 is not disposed in a region that overlaps optical element 2 when viewed in the optical axis direction of light source 1. More specifically, in casing 3, a reflection member that reflects the light reflected off incidence surface 21 of optical element 2 is not disposed in a region that overlaps optical element 2 and is positioned further on the hinder side than light source 1 when viewed in the optical axis direction of light source 1 (on the opposite side of optical element 2 in relation to light source 1).

If, in casing 3, a reflection member is disposed in a region that overlaps optical element 2 and is positioned further on the hinder side than light source 1 when viewed in the optical axis direction of light source 1 (on the opposite side of optical element 2 in relation to light source 1), noise due to stray light is caused easily in a region close to the optical axis. For example, when the reflection surface of the reflection member is parallel to incidence surface 21 of optical element 2, light incident on incidence surface 21 of optical element 2 at a small incidence angle (e.g. at less than 45 degrees) becomes stray light easily by being incident on incidence surface 21 of optical element 2 again since the respective reflection angles at incidence surface 21 and the reflection surface of the reflection member are also equally small. On the other hand, light incident on incidence surface 21 of optical element 2 at a large incidence angle (e.g. at 45 degrees or more) becomes absorbed or blocked easily by casing 3 without being incident on incidence surface 21 of optical element 2 again since the respective reflection angles at incidence surface 21 and the reflection surface of the reflection member are equally large. As a result, in comparison with a region far from the optical axis, noise due to stray light is caused more easily in a region close to the optical axis and the quality of the lighting device is lowered.

In contrast, lighting device 101 does not include a reflection member that causes stray light and thus, in lighting device 101, noise due to stray light is less likely to be caused even in a region close to the optical axis and lowering in quality can be hampered.

In lighting device 101, at least one of incidence surface 21 and emission surface 22 of optical element 2 is a free curved surface. Such light refracted in optical element 2 and emitted from emission surface 22 has a non-uniform intensity distribution.

In lighting device 101, preferably, the material of which optical element 2 is formed is an amorphous material. An amorphous material is lower in mold shrinkage than a crystalline material. Thus, when the material of which optical element 2 is formed is an amorphous material, optical element 2 can be molded relatively easily using a mold. In addition, an amorphous material is higher in transparency than a crystalline material. Accordingly, when the material of which optical element 2 is formed is an amorphous material, the light utilization efficiency of lighting device 101 can be enhanced.

### <Variation>

Lighting device 101 can be changed as follows.

Light source 1 may be provided so as to emit light whose intensity distribution is uniform regardless of the distance from the optical axis. Light source 1 may be provided so as to emit light whose intensity distribution has no symmetry. Also in the former case, optical element 2 can refract the light incident from incidence surface 21 and emit light having a non-uniform intensity distribution from emission surface 22 to irradiation surface 200. In the latter case, optical element 2 can emit, from emission surface 22 to irradiation surface 200, light whose intensity distribution non-uniformity is made higher than that of the light incident from incidence surface 21.

Optical element 2 may have any configuration as long as light having a non-uniform intensity distribution can be emitted from emission surface 22 to irradiation surface 200. At least one of incidence surface 21 and emission surface 22 of optical element 2 is not necessarily required to be a free curved surface. For example, in at least one of incidence surface 21 and emission surface 22, a non-uniform distribution may be formed within the surface in regard to the magnitude of surface roughness, the shade of color, or the like.

Lighting device 101 may include a plurality of light sources 1. The plurality of light sources 1 may be arranged side by side in a direction orthogonal to the optical axis direction.

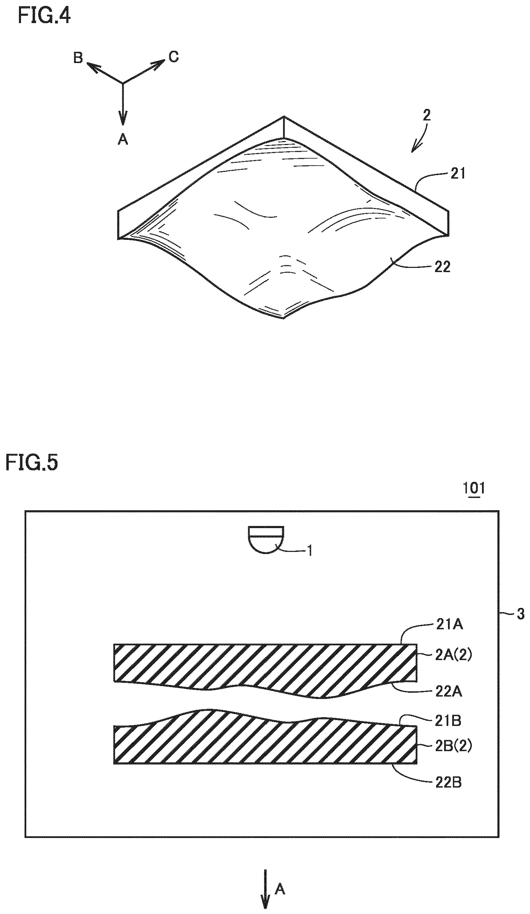

As illustrated in Fig. 5, lighting device 101 may include a plurality of optical elements 2. The plurality of optical elements 2 may include a first optical element 2A and a second optical element 2B arranged side by side in the optical axis direction. An incidence surface 21B of second optical element 2B is disposed so as to face an emission surface 22A of first optical element 2A. For example, at least one of an incidence surface 21A and emission surface 22A of first optical element 2A and incidence surface 21B and an emission surface 22B of second optical element 2B is a free curved surface. Emission surface 22A of first optical element 2A and incidence surface 21B of second optical element 2B may each be a free curved surface. The light that is emitted from the emission surface of second optical element 2B after passing through each of such first optical element 2A and such second optical element 2B also has a non-uniform intensity distribution on irradiation surface 200.

### Second Embodiment.

A lighting device 102 according to a second embodiment has the same configuration and effects as those of lighting device 101 according to the first embodiment unless otherwise described.

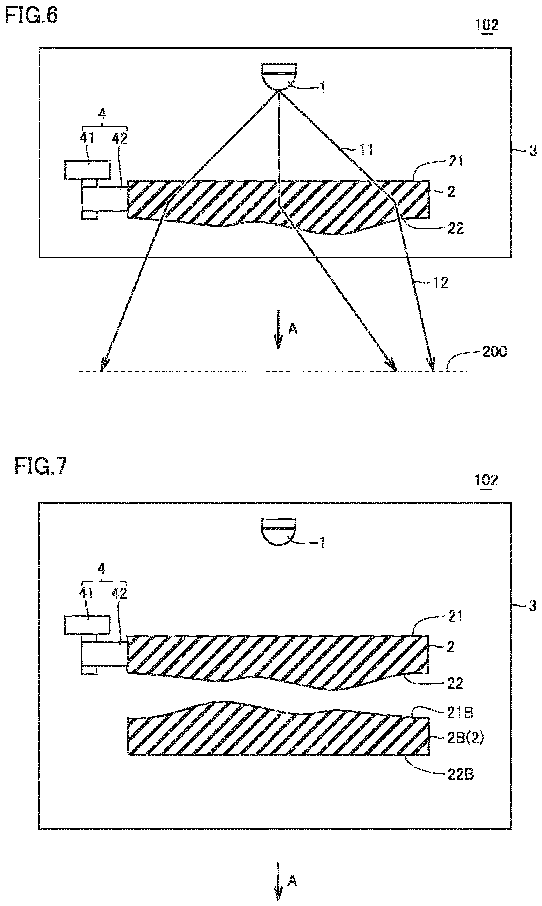

As illustrated in Fig. 6, lighting device 102 further includes a rotation portion 4 that rotates an optical element 2 in relation to a light source 1. Rotation portion 4 may change a rotation period of optical element 2. The rotation axis of optical element 2 is positioned, for example, coaxially with the optical axis of light source 1. The rotation axis of optical element 2 is not necessarily required to be positioned coaxially with the optical axis of light source 1.

Rotation portion 4 may have any configuration as long as it can rotate optical element 2. Rotation portion 4 includes, for example, a motor and a belt. The belt is provided, for example, over a rotation shaft of the motor and an outer peripheral end surface of optical element 2 so as to transmit the rotational force of the motor to optical element 2.

Lighting device 102 can form a lighting pattern of light having a non-uniform intensity distribution on an irradiation surface 200 and can change the lighting pattern with time. That is, lighting device 102 can cause fluctuation in the lighting pattern. Such a space rendering effect of lighting device 102 is higher than that of lighting device 101.

Preferably, rotation portion 4 is provided so as to bring a characteristic of 1/f fluctuation to the rotation period of optical element 2. In other words, rotation portion 4 controls the rotation period of optical element 2 so that the power spectrum density relating to the rotation period of optical element 2 is inversely proportional to the frequency.

In such lighting device 102, 1/f fluctuation can be caused in the lighting pattern by rotation portion 4 controlling the rotation period of optical element 2 as described above. The 1/f fluctuation is found in various natural phenomena in which a physical quantity changes with time, and is generally recognized as what gives a comfortable feeling or a relaxation effect to a person. While having a relatively simple structure, lighting device 102 can give a comfortable feeling or a relaxation effect to a person who visually recognizes the lighting pattern.

### <Variation>

Lighting device 102 can be changed as follows.

As illustrated in Fig. 7, similarly to lighting device 101 illustrated in Fig. 5, lighting device 102 may include a first optical element 2A and a second optical element 2B. First optical element 2A and second optical element 2B illustrated in Fig. 7 respectively have similar configurations to those of first optical element 2A and second optical element 2B illustrated in Fig. 5.

Rotation portion 4 rotates one of first optical element 2A and second optical element 2B relatively to the other. For example, rotation portion 4 may rotate only one of first optical element 2A and second optical element 2B. Rotation portion 4 may rotate each of first optical element 2A and second optical element 2B so that the respective rotation periods or the respective change amounts of the rotation periods are different from each other. For another example, rotation portion 4 may be capable of switching between a state in which only one of first optical element 2A and second optical element 2B is rotated and a state in which each of first optical element 2A and second optical element 2B is rotated so that the respective rotation periods or the respective change amounts of the rotation periods are different from each other. When each of first optical element 2A and second optical element 2B rotates, the rotation axis of first optical element 2A may be positioned coaxially with the rotation axis of second optical element 2B or is not necessarily required to be positioned coaxially therewith.

Such lighting device 102 also can give a comfortable feeling or a relaxation effect to a person who visually recognizes the lighting pattern while having a relatively simple structure.

### Third Embodiment.

A lighting device 103 according to a third embodiment has the same configuration and effects as those of lighting device 101 according to the first embodiment unless otherwise described.

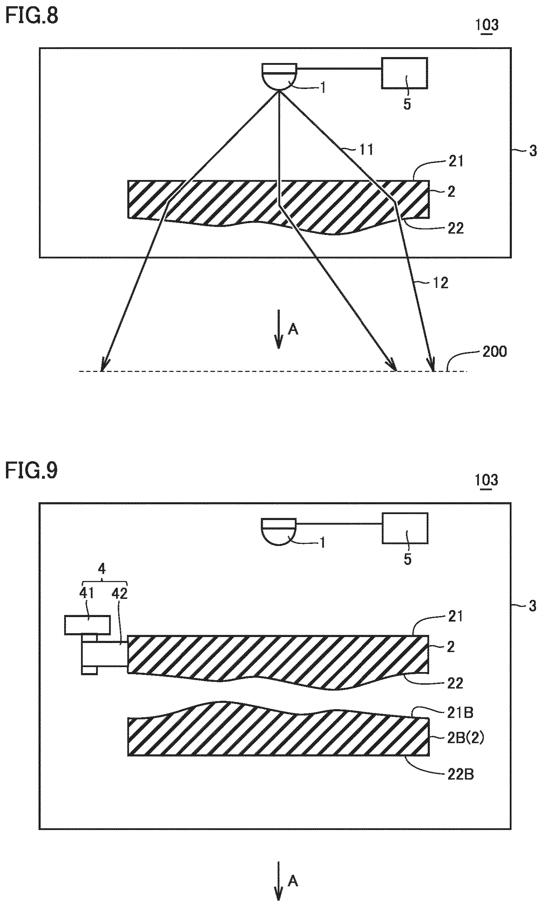

As illustrated in Fig. 8, lighting device 103 further includes a light amount controller 5 that controls the amount of light to be emitted from a light source 1. Light amount controller 5 changes a variation period of the light amount of the light to be emitted from light source 1.

Light amount controller 5 may have any configuration as long as the light amount of the light to be emitted from light source 1 can be controlled. Light amount controller 5 includes, for example, a driver that outputs a direct current voltage and a pulse width modulation (PWM) control circuit, and is provided so that the PWM control circuit controls a duty ratio of the direct current voltage output from the driver.

Lighting device 103 can form a lighting pattern of light having a non-uniform intensity distribution on an irradiation surface 200 and can change the lighting pattern with time. That is, lighting device 103 can cause fluctuation in the lighting pattern. Such a space rendering effect of lighting device 103 is higher than that of lighting device 101.

Preferably, light amount controller 5 is provided so as to bring a characteristic of 1/f fluctuation to the light amount of the light to be emitted from light source 1. In other words, light amount controller 5 controls the light amount of the light to be emitted from light source 1 so that the power spectrum density relating to the light amount of the light to be emitted from light source 1 is inversely proportional to the frequency.

In such lighting device 103, 1/f fluctuation can be caused in the lighting pattern by light amount controller 5 controlling the variation period of the light amount of the light to be emitted from light source 1 as described above. While having a relatively simple structure, lighting device 103 can give a comfortable feeling or a relaxation effect to a person who visually recognizes the lighting pattern.

### <Variation>

Lighting device 103 can be changed as follows.

As illustrated in Fig. 9, lighting device 103 may further include a rotation portion 4 similarly to lighting device 102. In such lighting device 103, not only the variation period of the light amount of the light to be emitted from light source 1 can be changed by light amount controller 5, but also the rotation period of an optical element 2 can be changed by rotation portion 4. Preferably, rotation portion 4 and light amount controller 5 can control light source 1 and rotation element 2 so that the behavior of the change in the rotation period of optical element 2 is synchronized with the behavior of the change in the variation period of the light amount of the light to be emitted from light source 1. For example, when the rotation speed of optical element 2 becomes high and the rotation period of optical element 2 becomes short, rotation portion 4 and light amount controller 5 can control light source 1 and rotation element 2 so that the light amount of the light to be emitted from light source 1 increases. More preferably, rotation portion 4 is provided so as to bring a characteristic of 1/f fluctuation to the rotation period of optical element 2, and light amount controller 5 is provided so as to bring a characteristic of 1/f fluctuation to the light amount of the light to be emitted from light source 1. Also in this case, it is preferable that rotation portion 4 and light amount controller 5 can control light source 1 and rotation element 2 so that the behavior of the change in the rotation period of optical element 2 is synchronized with the behavior of the change in the variation period of the light amount of the light to be emitted from light source 1.

Similarly to lighting device 101 illustrated in Fig. 5, lighting device 103 may include a first optical element 2A and a second optical element 2B.

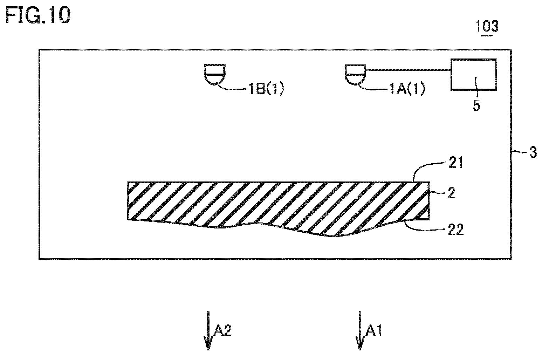

As illustrated in Fig. 10, lighting device 103 may include a plurality of light sources 1. The plurality of light sources 1 may include a first light source 1A and a second light source 1B. First light source 1A and second light source 1B are arranged side by side in a direction orthogonal to an optical axis direction A1 of first light source 1A. When viewed in optical axis direction A1 of first light source 1A, first light source 1A and second light source 1B are disposed inside respective outer peripheral edges of an incidence surface 21 and an emission surface 22 of optical element 2. Optical axis direction A1 of first light source 1A may be parallel to an optical axis direction A2 of second light source 1B or may intersect therewith.

Light amount controller 5 changes the variation period of the light amount of the light to be emitted from at least one of first light source 1A and second light source 1B. For example, light amount controller 5 may change only the variation period of the light amount of the light to be emitted from one of first light source 1A and second light source 1B. Light amount controller 5 may change the change amount of the variation period of the light amount of the light to be emitted from each of first light source 1A and second light source 1B so that those change amounts are different from each other. For another example, light amount controller 5 may be capable of switching between a state in which only the variation period of the light amount of the light to be emitted from one of first light source 1A and second light source 1B is changed and a state in which the change amount of the variation period of the light amount of the light to be emitted from each of first light source 1A and second light source 1B is changed so that those change amounts are different from each other.

Such lighting device 103 also can give a comfortable feeling or a relaxation effect to a person who visually recognizes the lighting pattern while having a relatively simple structure.

The above-described embodiments can each be changed or omitted as desired. Further, at an implementation stage, the above-described embodiments can be variously changed without departing from the gist thereof. In addition, the above-described embodiments include inventions at various stages, and various inventions can be extracted by suitably combining a plurality of constituent elements disclosed.

### REFERENCE SIGNS LIST

1 light source; 1A first light source; 1B second light source; 2 optical element; 2A first optical element; 2B second optical element; 3 casing; 4 rotation portion; 5 light amount controller; 21 incidence surface; 22 emission surface; 101, 102, 103 lighting device.

## Claims

1. A lighting device comprising:
a light source; and
at least one optical element formed of a crystalline or amorphous solid, wherein
the at least one optical element includes an incidence surface on which light emitted from the light source is incident, and an emission surface from which the light incident from the incidence surface is emitted toward an irradiation surface,
when viewed in an optical axis direction of the light source, the light source is disposed inside respective outer peripheral edges of the incidence surface and the emission surface of the at least one optical element, and
the at least one optical element is provided so as to refract the light incident from the incidence surface to emit light having a non-uniform intensity distribution from the emission surface to the irradiation surface.

2. The lighting device according to claim 1, wherein the at least one optical element is provided so as to emit light whose intensity distribution has no rotational symmetry to the irradiation surface.

3. The lighting device according to claim 1 or 2, further comprising a casing to accommodate the light source and the at least one optical element in the casing, wherein
in the casing, a reflection member to reflect the light emitted from the light source is not disposed in a region that overlaps the at least one optical element when viewed in the optical axis direction of the light source.

4. The lighting device according to any one of claims 1 to 3, wherein at least one of the incidence surface and the emission surface is a free curved surface.

5. The lighting device according to any one of claims 1 to 4, further comprising a rotation portion to rotate the at least one optical element in relation to the light source.

6. The lighting device according to claim 5, wherein the rotation portion changes a rotation period of the at least one optical element.

7. The lighting device according to claim 6, wherein the rotation portion is provided so as to bring a characteristic of 1/f fluctuation to the rotation period of the at least one optical element.

8. The lighting device according to any one of claims 5 to 7, wherein
the at least one optical element includes a first optical element and a second optical element that are arranged side by side in the optical axis direction,
the incidence surface of the second optical element is disposed so as to face the emission surface of the first optical element, and
the rotation portion rotates one of the first optical element and the second optical element relatively to the other of the first optical element and the second optical element.

9. The lighting device according to any one of claims 1 to 8, further comprising a light amount controller to control a light amount of light to be emitted from the light source, wherein
the light amount controller changes a variation period of the light amount of the light to be emitted from the light source.

10. The lighting device according to claim 9, wherein the light amount controller is provided so as to bring a characteristic of 1/f fluctuation to the light amount of the light to be emitted from the light source.

11. The lighting device according to claim 9 or 10, wherein
the light source includes a first light source and a second light source,
when viewed in an optical axis direction of the first light source, the first light source and the second light source are disposed inside respective outer peripheral edges of the incidence surface and the emission surface of the at least one optical element, and
the light amount controller controls light to be emitted from at least one of the first light source and the second light source.

12. The lighting device according to any one of claims 1 to 11, wherein a material of which the at least one optical element is formed includes an amorphous resin material.

13. The lighting device according to any one of claims 1 to 12, wherein the light source is capable of emitting white light.

14. The lighting device according to any one of claims 1 to 13, wherein the light source is capable of changing a wavelength range of light to be emitted.
